# EUROPEAN PATENT APPLICATION

(11) **EP 2 498 382 A2**
(43) Date of publication of application: **12.09.2012**
(21) Application number: 12154785.5
(22) Date of filing: 09.02.2012
(51) Int. Cl.: H02K 3/487

(54) **Rotor for rotating electric machine and manufacturing method thereof**

(30) Priority: 09.03.2011 IT MI20110087 U
(71) Applicant: ABB S.p.A., 20124 Milano (IT)
(72) Inventor: Moioli, Giuseppe, 20037 Paderno Dugnano (MI) (IT); Norcini, Emidio, 20052 Monza (IT); Vignati, Livio, 26854 Pieve Fissiraga (LO) (IT)
(74) Representative: De Santis, Giovanni

(57) **Abstract**

A rotor (1) for a rotating electric machine, comprising at least a pair of cavities (10, 101) having a bottom wall (11) from which a first lateral wall (12) and a second lateral wall (13) extend transversally, wherein each cavity (10, 101) is suitable for receiving therein a respective lateral portion (22, 220) of a winding (20) of the rotor (1) through an insertion opening (14) that extends facing the bottom wall (11) from the first lateral wall (12) to the second lateral wall (13).

The rotor (1) comprises blocking means (30) suitable for blocking the lateral portions (22, 220) of the winding (20) in the respective pair of cavities by operatively coupling with coupling means (15, 16) defined in the rotor (1).

## Description

The present disclosure relates to a rotor for a rotating electric machine and the manufacturing method for the rotor itself, which offers improved features for the insertion of windings into the rotor.

Rotating electric machines, such as for example electrical motors or generators, are devices that due to their versatility, reliability, and long life, have an increased widespread use in a large number of sectors.

As known, rotating electric machines comprise a rotor suitable for rotating around its axis of rotation. In the rotor, a plurality of cavities, extending for at least a portion of the longitudinal extension of the rotor, is radially defined with respect to the axis of rotation. Windings are inserted into the cavities in order to configure the phases, or poles, of the rotor.

According to known embodiments, the windings of the rotor comprise a set of straps connected in series, and the interior of the cavities is accessible through a cleft that allows the insertion of the straps for the respective windings. Such cleft is sized so that the straps of a winding can be inserted in the respective cavity one at a time.

In practice, a first strap of the winding is initially inserted into the respective cavity through the suitable insertion cleft, and is then moved until contacting a wall that defines the cavity itself; then a second strap is inserted into the cavity through the insertion cleft, and is moved towards the first strap, until contacting with it. This same process is repeated for all other straps of the winding, until the cavity is filled.

The described embodiment offers the advantage that the structure itself of the cavities of the rotor is suitable for helping to hold the straps inside it, withstanding the centrifugal force applied by the straps themselves during the rotation of the rotor around its axis of rotation.

However, the fact that the straps of the windings have to be inserted first and then moved in the respective cavity one at a time, makes the rotor manufacturing process particularly slow and complex, and therefore expensive.

The object of the present disclosure is to overcome the disadvantage pointed out in the prior art by providing a rotor that requires a simple, rapid, and economical manufacturing process.

Such object is achieved by a rotor for a rotating electric machine, suitable for rotating around an axis of rotation and comprising at least a first cavity and at least a second cavity, which are radially defined relative to the axis of rotation along at least a portion of the longitudinal extension of the rotor along the axis of rotation itself, said at least a first cavity and said at least a second cavity comprising a bottom wall from which a first lateral wall and a second lateral wall extend facing each other and transversal with respect to the bottom wall, said at least a first cavity and said at least a second cavity being suitable for receiving therein a first lateral portion and a second lateral portion, respectively, of a winding of the rotor through an insertion opening which extends facing the bottom wall from the first lateral wall to the second lateral wall.

The rotor comprises blocking means suitable for blocking the first lateral portion and the second lateral portion of the winding inside the first cavity and the second cavity, respectively, by operatively coupling to respective coupling means defined in the rotor.

The intended scope is moreover achieved through a manufacturing method of a rotor for a rotating electric machine suitable for rotating around an axis of rotation, comprising:
a) defining at least a first cavity and at least a second cavity radially with respect to the axis of rotation along at least a portion of the longitudinal extension of the rotor along the axis of rotation itself, said at least a first cavity and said at least a second cavity comprising a bottom wall from which a first lateral wall and a second lateral wall extend facing each other and transversal with respect to the bottom wall, said at least a first cavity and said at least a second cavity being suitable for receiving therein a first lateral portion and a second lateral portion, respectively, of a winding of the rotor;
b) inserting the first lateral portion and the second lateral portion of the winding inside the first cavity and inside the second cavity, respectively, through an insertion opening of the first cavity and of the second cavity, which extends facing the bottom wall from the first lateral wall to the second lateral wall.

The method further comprises the following step:
c) blocking the first lateral portion and the second lateral portion of the winding inside said at least a first cavity and said at least a second cavity through coupling means suitable for operatively coupling to respective coupling means defined in the rotor.

Characteristics and advantages will become more apparent from the non-exclusive description of a preferred embodiment of a rotor for a rotating electric machine according to the present disclosure, illustrated for exemplification purposes in the accompanying drawings; wherein:
- figure 1 is a perspective view of a rotor with its windings inserted into the respective cavities;
- figure 2 is a cross-sectional view of a cavity of the rotor in figure 1, with the straps of the respective winding inserted therein and a wedge coupled to it;
- figure 3 is a schematic diagram of two sections of the rotor in Figure 1, coupled to the respective windings that define a phase of the rotor.

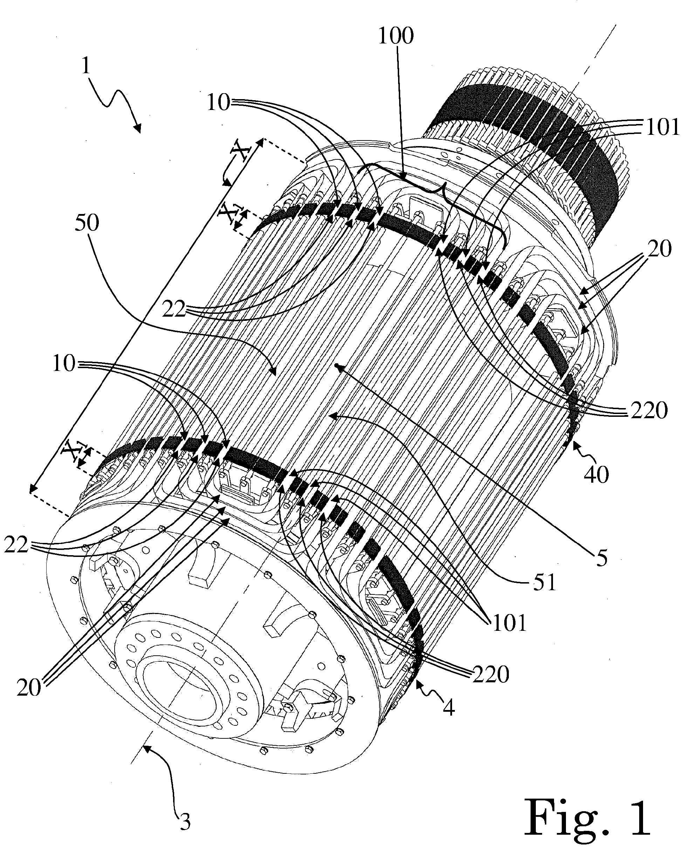

Figure 1 shows a preferred embodiment of a rotor 1 according to the present disclosure, which can be used in a rotating machine such as for instance an electric motor or generator. Rotor 1 is suitable for rotating around its axis of rotation 3 illustrated in Figure 1.

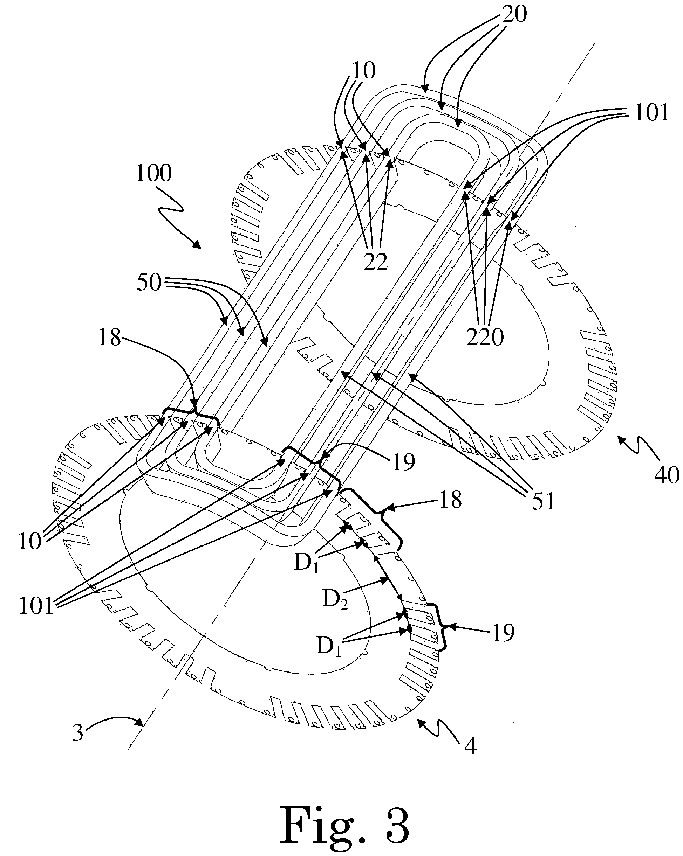

The rotor 1 comprises a plurality of cavities radially defined with respect to the axis of rotation 3, along at least a portion of the longitudinal extension of the rotor 1 along the axis of rotation 3 itself, longitudinal portion which is indicated by the reference "X" in the example illustrated in Figure 1. For simplicity sake, reference will be made in the following description to at least a first cavity 10 and at least a second cavity 101 of said plurality of cavities, which are suitable for receiving therein a first lateral portion 22 and a second lateral portion 220, respectively, of a corresponding winding 20 of rotor 1. In particular, the first lateral portion 22 inserted into a cavity 10 and the second lateral portion 220 inserted into a cavity 101 belong to a first side 50 and a second side 51, respectively, of the winding 20. Once such winding 20 is inserted into the rotor 1, the first side 50 and the second side 51 extend along the axis of rotation 3 of the rotor 1 itself, facing each other (see for example Figure 1 and Figure 3).

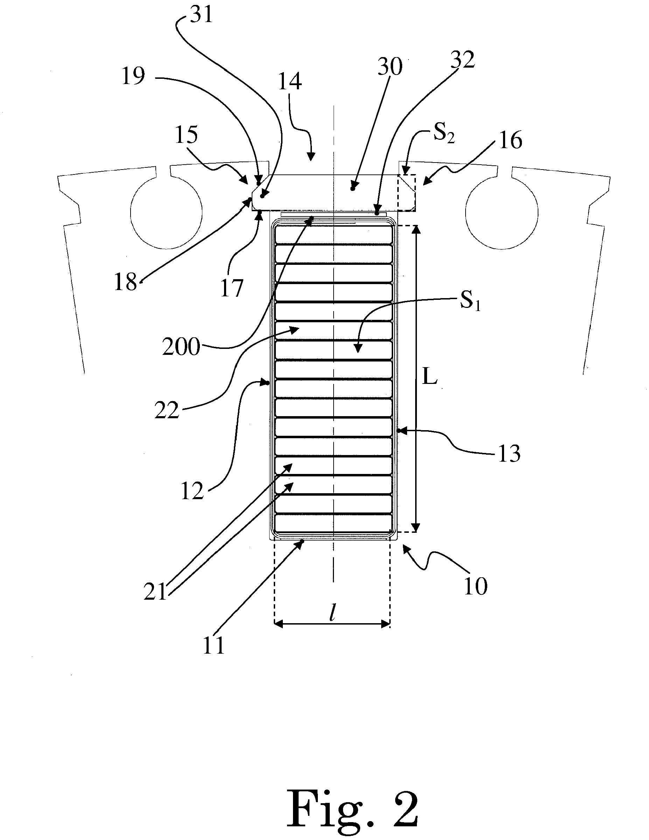

The windings 20 of the rotor 1 are preferably realized by a set of straps 21 electrically in series, produced by bending a strip of metallic material, preferably copper (see for example the straps 21 illustrated in Figure 2). The set of straps 21 inserted into a respective cavity 10 (or a respective cavity 101) is wrapped by at least a layer of an insulating material 200 (see Figure 2).

The cavity 10 illustrated in detail in Figure 2 (structurally the same as a cavity 101) comprises a bottom wall 11, from which a first lateral wall 12 and a second lateral wall 13 extend facing each other and transversal with respect to the bottom wall 11.

According to a preferred embodiment, the cavities 10, 101 of the rotor 1 are arranged along the longitudinal extension X of the rotor 1 itself in rows of cavities 10 separated from each other and aligned along the axis of rotation 3, and in rows of cavities 101 separated from each other and aligned along the axis of rotation 3. Alignment among cavities in the same row is to be understood as alignment along the direction defined by the axis of rotation 3 of the bottom walls 11, of the first lateral walls 12 and of the second lateral walls 13 of such cavities.

In practice, the cavities 10, 101 of the rotor 1 are defined along portions of the longitudinal extension X of the rotor 1 itself, which are physically separated (preferably equidistant) from each other. In particular, such longitudinal portions are mounted and fixed on a central body 5 of the rotor 1 (see Figure 1).

For clarity of visualization, Figure 1 illustrates only a first longitudinal portion 4 and a second longitudinal portion 40 of the rotor 1, each having a longitudinal extension indicated in Figure 1 by the reference "X₁".

The other longitudinal portions of the rotor 1, not illustrated in Figure 1, are equivalent to the first longitudinal portion 4 and to the second longitudinal portion 40, and are mounted on the central body 5 equidistant from each other along the longitudinal extension X of the rotor 1, between the first longitudinal portion 4 and the second longitudinal portion 40.

Cavities 10, 101 defined on the different longitudinal portions of the rotor 1 are aligned to each other along the axis of rotation 3. In this way, the first side 50 and the second side 51 of each winding 20 of the rotor 1 are inserted in a corresponding row of cavities 10 and a corresponding row of second cavities 101, respectively.

Alternatively to the illustrated embodiment, the rows of cavities 10, 101 could be substituted by single cavities extending for the entire longitudinal extension X of the rotor 1.

The radial disposition of cavities 10, 101 of the rotor 1, which are defined along the same longitudinal portion of the rotor 1 itself (such as for example the first longitudinal portion 4 and the second longitudinal portion 40 illustrated in Figure 1) is now considered.

The rotor 1 comprises a plurality of phases 100 configured by a certain number of windings 20. For each phase 100 of the rotor 1, cavities 10, 101 defined along the same longitudinal portion of the rotor 1 comprise a first group of cavities 10 radially adjacent to each other (overall indicated with reference number 18 in the example in Figure 3) and a second group of cavities 101 radially adjacent to each other (overall indicated with reference number 19 in the example in Figure 3). In particular, cavities 10 of the first group 18 are suitable for receiving the lateral portions 22 of sides 50 of the windings 20 that configure the respective phase 100, and second cavities 101 of the second group 19 are suitable for receiving the lateral portions 220 of sides 51 of such windings 20.

The minimum distance D₁ between cavities 10 adjacent to each other in the first group 18, preferably equal to the minimum distance between cavities 101 adjacent to each other in the group 19, is less than the minimum distance D₂ between a cavity 10 of the first group 18 and a cavity 101 of the second group 19 radially defined adjacent to each other.

The rotor 1 illustrated in Figure 1 comprises six phases 100, each of them realized by three windings 20; in particular, Figure 3 shows three windings 20 which realize a phase 100, coupled for clarity of visualization to only a cross section of the first longitudinal portion 4 and of the second longitudinal portion 40 of the rotor 1. Considering for simplicity sake only the coupling to the section of the first longitudinal portion 4, the lateral portions 22 of the three windings 20 are inserted into a respective first group of cavities 18 (comprising three cavities 10 adjacent and equidistant by the same minimum distance D₁); and the lateral portions 220 of such three windings 20 are inserted into a respective second group of cavities 19 (comprising three second cavities 101 adjacent and equidistant from each other by the same minimum distance D₁). The second group of cavities 19 is adjacent to the first group 18 and separated from it by the minimum distance D₂.

Alternatively to the illustrated examples, the number of phases 100 of the rotor 1 and the number of windings 20 that configure such phases 100 may be different from the illustrated one, according to the specifications and the requirements of the application of the rotor 1; and hence also the number of cavities 10 of the first group 18 and the number of cavities 101 of the second group 19 may be different from the illustrated one, according to the different configuration of the phases 100.

For simplicity sake the following description will refer to cavities 10, in particular to the the cavity 10 illustrated in the example in Figure 2. The characteristics described for the cavity 10, as well as the interaction of such cavity 10 with other parts of the rotor 1, are to be understood as valid for all the cavities of the rotor 1.

Advantageously, in the rotor 1 according to the present disclosure the cavities 10 are suitable for receiving therein the respective lateral portions 22 of windings 20 through an insertion opening 14 that extends facing the bottom wall 11 from the first lateral wall 12 to the second lateral wall 13 (see the exemplary embodiment of cavity 10 illustrated in Figure 2).

In particular, according to a preferred embodiment, the cavity 10 is suitable for receiving therein the respective lateral portion 22 of the winding 20 so that section S₁ (illustrated in Figure 2) of such lateral portion 22 (transversal to axis of rotation 3) has its bigger side L transversal to the bottom wall 11 of the cavity 10, and its smaller side *l* parallel to the bottom wall 11.

The example illustrated in Figure 2 shows how straps 21 of the winding 20 are stacked one on top of each other, with the bigger side of the cross section of each strap 21 arranged parallel to the bottom wall 11.

According to an alternative embodiment not illustrated in Figures, cavities 10 in the rotor 1 may be suitable for receiving therein the respective lateral portions 22 of the windings 20 so that section S₁ of such lateral portions 22 has its bigger side L parallel to the bottom wall 11 of the cavity 10, and its smaller side *l* transversal to the bottom wall 11.

In this embodiment, straps 21 of the winding 20 are inserted into the cavity 10 adjacent to one another, with the smaller side of the cross section of each strap 21 resting on the bottom wall 11.

Advantageously, the rotor 1 according to the present disclosure comprises blocking means suitable for blocking the lateral portions 22 of its windings 20 inside the respective cavities 10 during the rotation of the rotor 1 around its axis of rotation 3, in spite of the presence of the insertion openings 14.

According to a preferred embodiment, the blocking means of the rotor 1 are suitable for operatively coupling to respective coupling means defined in the rotor 1, preferably inside cavities 10.

Preferably, upon such coupling, the blocking means cover at least a portion of the insertion opening 14 of the cavities 10.

According to a preferred embodiment, the blocking means comprise at least a first insertion recess 15 and a second insertion recess 16, which are defined along the first lateral wall 12 and the second lateral wall 13 of the cavities 10, respectively, lengthwise the axis of rotation 3.

The first insertion recess 15 and the second insertion recess 16 are suitable for receiving respective portions 31 of a wedge 30 to cover insertion opening 14.

The first insertion recess 15 and the second insertion recess 16 advantageously have a cross section S₂ (illustrated in Figure 2), transversal with respect to the axis of rotation 3, with a substantially trapezoidal shape, according to a configuration known as "dovetail". In particular, as shown in Figure 2, the first insertion recess 15 and the second insertion recess 16 are defined by: a lower edge 17 substantially parallel to the bottom wall 11 of the cavity 10, by a central edge 18 that extends transversely from the lower edge 17, and an upper edge 19 that extends from the central edge 18 tilt so as to face towards the lower edge 17. Portions 31 of the wedge 30 have parts configured for contacting with the upper edge 19 when inserting the wedge 30 into the first insertion recess 15 and the second insertion recess 16 respectively.

Preferably, a sub-wedge 32 is inserted into the cavity 10 between the wedge 30 and the lateral portion 22 of the winding 20. In particular, in the example in Figure 2, the sub-wedge 32 is positioned over the insulating layer 200 that wraps the stack of straps 21 inserted into the cavity 10 and performs the double function of preventing damages of the insulating layer 200 during the longitudinal sliding of the wedge 30 into the first insertion recess 15 and the second insertion recess 16, and helping to hold the wedge 30 blocked in its insertion position in the first insertion recess 15 and in the second insertion recess 16 during the rotation of the rotor 1.

The present disclosure further relates to the manufacturing method of the rotor 1, comprising the following step:
a) defining at least a first cavity 10 and at least a second cavity 101 in the rotor 1, according to the examples previously described and illustrated in Figures.
   In particular, according to the preferred embodiment of the rotor 1, the cavities 10, 101 are arranged in rows of cavities 10, 101 separated and aligned along the axis of rotation 3, as in the examples previously described and illustrated in Figures.
   The manufacturing method of the rotor 1 further comprises the following step:
b) inserting the first lateral portion 22 and the second lateral portion 220 of a winding 20 of the rotor 1 into said at least a first cavity 10 and said at least a second cavity 101, respectively, through the insertion opening 14 of the cavities 10, 101 themselves.
   Preferably, step a) includes defining said at least a first cavity 10 and said at least a second cavity 101 so as to be suitable for receiving the first lateral portion 22 and the second lateral portion 220 of the winding 20, such that the section S₁ of the first lateral portion 22 and of the second lateral portion 220 (transversal to the axis of rotation 3) has its bigger side L transversal to the bottom wall 11, and its smaller side / parallel to the bottom wall 11, as is the case in the examples previously described and illustrated in Figures (see in particular Figure 2).
   The manufacturing method further comprises the following step:
c) blocking the first lateral portion 22 and the second lateral portion 220 of the winding 20 inside the first cavity 10 and the second cavity 101, respectively, through blocking means suitable for operatively coupling to respective coupling means defined in the rotor 1, preferably in cavities 10, 101.

Preferably, upon such coupling, the blocking means cover at least a portion of the insertion opening 14.

Preferably, step a) includes defining at least a first insertion recess 15 and a second insertion recess 16 along at least a portion of the first lateral wall 12 and along at least a portion of the second lateral wall 13, respectively; and step c) includes inserting respective portions 31 of the wedge 30 into the first insertion recess 15 and the second insertion recess 16 to cover the insertion opening 14, as is the case in the examples previously described and illustrated in Figures (see in particular Figure 2).

Preferably, in step a) the first insertion recess 15 and the second insertion recess 16 are defined so as to have a section S₂ (transversal to the axis of rotation 3) with a substantially trapezoidal shape, according to the examples previously described and illustrated in Figures (see in particular Figure 2).

In practice it has been verified that the rotor 1 according to the present disclosure and the relative manufacturing method fully achieve the predefined objective. In particular, the insertion opening 14 enables the full insertion of the set of straps 21 into the respective cavity of the rotor 1, insertion which occurs in a single manufacturing step without the need, after this step, to move the straps 21 in any way inside the cavity itself.

The insertion of the windings 20 into the respective cavities of the rotor 1 is therefore particularly quick, easy and cheap.

The blocking means of the rotor 1, such as the wedge 30 in the illustrated examples, are suitable for conveniently holding the straps 21 of the windings 20 blocked inside the respective cavities of the rotor 1, which due to the centrifugal force exerted on them during the rotation of the rotor 1 around its axis of rotation 3, are pushed to exit from the cavities themselves through the insertion openings 14.

In particular, the "dovetail" configuration described for the first insertion recess 15 and for the second insertion recess 16 enable the wedge 30 to better withstand the centrifugal force exerted by the straps 21 during the rotation of the rotor 1.

The preferred embodiment of the rotor 1 (where the cross section S₁ of the lateral portions 22, 220 of the windings 20 has its bigger side L transversal to the bottom wall 11) enables to easily insert the stack of straps 21 into the respective cavities of the rotor, and blocking such stack inside during the rotation of the rotor 1.

In particular, the blocking means, such as the wedge 30, must withstand the pushing of the straps 11 by covering the insertion opening 14 with an extension from the first lateral wall 12 to the second lateral wall 13 smaller than the extension foreseen in the alternative embodiment of the rotor 1 (where the cross section S₁ of the lateral portions 22, 220 of the windings 20 has the bigger side L parallel to the bottom wall 11).

The solutions described are susceptible to numerous modifications and variations, all within the scope of the present disclosure. For example, alternatively to the examples described and illustrated in Figures, the blocking means for the cavity 10, 101 of the rotor 1 may be suitable for operatively coupling to respective coupling means defined in portions of the rotor comprised between the cavity 10, 101 itself and another two cavities 10, 101 positioned adjacent to it in the rotor 1. For example, the wedge 30 may be coupled to respective coupling recesses defined in the rotor 1 outside cavity 10, near to the first lateral wall 12 and the second lateral wall 13.

Furthermore, the blocking means may be different than the wedge 30 used in the examples illustrated in Figures. For example, the cavities 10, 101 of the rotor 1 may be coupled to tie-rods that partially lock the insertion openings 14 so as to lock the straps 21 of the windings 20 inside them.

Finally, all details can be replaced by other equivalent technical elements. In practice, the type of materials within the scope of the applications described above, as well as the dimensions, may be of any kind according to the requirements and the state of the art.

## Claims

1. A rotor (1) for a rotating electric machine, suitable for rotating around an axis of rotation (3) and comprising at least a first cavity (10) and at least a second cavity (101), which are radially defined relative to said axis of rotation (3) along at least a portion (4, 40) of the longitudinal extension (X) of the rotor (1) along the axis of rotation (3) itself, said at least a first cavity (10) and said at least a second cavity (101) comprising a bottom wall (11) from which a first lateral wall (12) and a second lateral wall (13) extend facing each other and transversal with respect to said bottom wall (11), said at least a first cavity (10) and said at least a second cavity (10) being suitable for receiving therein a first lateral portion (22) and a second lateral portion (220), respectively, of a winding (20) of the rotor (1) through an insertion opening (14) which extends facing said bottom wall (11) from said first lateral wall (12) to said second lateral wall (13), **characterized in that** it comprises blocking means (30) suitable for blocking the first lateral portion (22) and the second lateral portion (220) of said winding (20) inside the first cavity (10) and the second cavity (101), respectively, by operatively coupling to respective coupling means (15, 16) defined in the rotor (1).

2. The rotor (1) according to claim 1, **characterized in that** said coupling means (15, 16) comprise at least a first insertion recess (15) and a second insertion recess (16), which are defined along at least a portion of said first lateral wall (12) and along at least a portion of said second lateral wall (13), respectively, and which are suitable for receiving respective portions of said blocking means (30).

3. The rotor (1) according to claim 2, **characterized in that** said first insertion recess (15) and said second insertion recess (16) have a section (S₂) transversal relative to said axis of rotation (3) with a substantially trapezoidal shape.

4. The rotor (1) according to one or more of the preceding claims, **characterized in that** said blocking means (30) comprise at least a wedge (30) suitable for covering the insertion opening (14) of said at least a first cavity (10), and at least a wedge (30) suitable for covering the insertion opening (14) of said at least a second cavity (101).

5. The rotor (1) according to one or more of the preceding claims, **characterized in that** said at least a first cavity (10) and said at least a second cavity (101) are suitable for receiving the first lateral portion (22) and the second lateral portion (220), respectively, of said winding (20), in such a way that a section (S₁) of the first lateral portion (22) and of the second lateral portion (220) transversal to said axis of rotation (3) has a bigger side (L) transversal to the bottom wall (11) of the first cavity (101) and the second cavity (10), respectively.

6. The rotor (1) according to one or more of the preceding claims, **characterized in that** said at least a first cavity (10) comprises at least a row of first cavities (10) separated from each other and aligned along said axis of rotation (3), and **in that** said at least a second cavity (101) comprises at least a row of second cavities (101) separated from each other and aligned along said axis of rotation (3).

7. The rotor (1) according to one or more of the preceding claims, **characterized in that** said at least a first cavity (10) comprises at least a first group of cavities (18) radially defined adjacent to each other in said at least a portion (4, 40) of the longitudinal extension (X) of the rotor (1), and **in that** said at least a second cavity (101) comprises at least a second group of cavities (19) radially defined adjacent to each other in said at least a portion (4, 40) of the longitudinal extension (X) of the rotor (1), wherein the minimum distance (D₁) between first cavities (10) adjacent in the first group of cavities (18) and the minimum distance (D₁) between second cavities (101) adjacent in the second group of cavities (19) is less than the minimum distance (D₂) between a first cavity (10) of the first group of cavities (18) and a second cavity (101) of the second group of cavities (19), which are radially defined adjacent to each other in said at least a portion (4, 40) of the longitudinal extension (X) of the rotor (1).

8. A rotating electric machine **characterized in that** it comprises a rotor (1) according to one or more of claims 1-7.

9. A method of manufacturing a rotor (1) for a rotating electric machine suitable for rotating around an axis of rotation (3), said method comprising:
a) defining at least a first cavity (10) and at least a second cavity (101) radially with respect to said axis of rotation (3) along at least a portion (4, 40) of the longitudinal extension (X) of the rotor (1) along the axis of rotation (3) itself, said at least a first cavity (10) and said at least a second cavity (101) comprising a bottom wall (11) from which a first lateral wall (12) and a second lateral wall (13) extend facing each other and transversal with respect to said bottom wall (11), said at least a first cavity (10) and said at least a second cavity (101) being suitable for receiving therein a first lateral portion (22) and a second lateral portion (220), respectively, of a winding (20) of the rotor (1);
b) inserting the first lateral portion (22) and the second lateral portion (220) of said winding (20) inside the first cavity (10) and inside the second cavity (101), respectively, through an insertion opening (14) of the first cavity (10) and of the second cavity (101), which extends facing the bottom wall (11) from said first lateral wall (12) to said second lateral wall (13);
said method **characterized in that** it comprises the following step:
d) blocking the first lateral portion (22) and the second lateral portion (220) of said winding (20) inside said at least a first cavity (10) and said at least a second cavity (101) through coupling means (30) suitable for operatively coupling to respective coupling means (15, 16) defined in the rotor (1).

10. The manufacturing method according to claim 9, **characterized in that** said step a) comprises defining at least a first insertion recess (15) and a second insertion recess (16) along at least a portion of said first lateral wall (12) and along at least a portion of said second lateral wall (13), respectively; and **in that** said step c) comprises inserting respective portions (31) of a wedge (30) into said first insertion recess (15) and said second insertion recess (16).

11. The method according to claim 10, **characterized in that** in said step a) the first insertion recess (15) and the second insertion recess (16) are defined so as to have a section (S₂) transversal relative to said axis of rotation (3) with a substantially trapezoidal shape.

12. The method according to one or more claims 9-11, **characterized in that** said step a) comprises defining said at least a first cavity (10) and said at least a second cavity (101) so that they are suitable for receiving the first lateral portion (22) and the second lateral portion (220), respectively, of said winding (20) in such a way that a section (S₁) of the first lateral portion (22) and of the second lateral portion (220) transversal to said axis of rotation (3) has a bigger side (L) transversal to the bottom wall (11) of the first cavity (10) and the second cavity (101), respectively.
